# EUROPÄISCHE PATENTSCHRIFT

(11) **EP 1 902 203 B1**
(45) Veröffentlichungstag und Bekanntmachung des Hinweises auf die Patenterteilung: **06.01.2010**
(21) Anmeldenummer: 06818221.1
(22) Anmeldetag: 07.07.2006
(51) Int. Cl.: F01N 3/28, F01N 3/022, B01D 39/20, B01D 46/24

(54) **FILTERLAGE FÜR EINEN, INSBESONDERE KONISCHEN, WABENKÖRPER ZUR ABGASBEHANDLUNG UND VERFAHREN ZUR HERSTELLUNG DER FILTERLAGE**
FILTER LAYER FOR AN, IN PARTICULAR CONICAL, HONEYCOMB ELEMENT FOR EXHAUST-GAS TREATMENT, AND METHOD FOR MANUFACTURING THE FILTER LAYER
COUCHE FILTRANTE POUR UN ELEMENT ALVEOLAIRE, NOTAMMENT CONIQUE, DE TRAITEMENT DE GAZ D'ECHAPPEMENT ET PROCEDE POUR FABRIQUER CETTE COUCHE FILTRANTE

(30) Priorität: 08.07.2005 DE 102005032348
(43) Veröffentlichungstag der Anmeldung: 26.03.2008
(73) Patentinhaber: Emitec Gesellschaft für Emissionstechnologie mbH, 53797 Lohmar (DE)
(72) Erfinder: WIERES, Ludwig, 51491 Overath (DE); KURTH, Ferdi, 53894 Mechernich (DE); GUTOWSKI, Jörg, D-99817 Eisenach (DE); FAUST, Hans-Günter, 51143 Köln (DE)
(74) Vertreter: Rössler, Matthias
(86) Internationale Anmeldenummer: PCT/EP2006/006658
(87) Internationale Veröffentlichungsnummer: WO 2007/028440

(56) Entgegenhaltungen:
- US-A- 5 506 028
- US-A1- 2003 086 837
- US-A1- 2003 202 919
- US-B1- 6 720 060

## Beschreibung

Die vorliegende Erfindung betrifft eine Filterlage aus zumindest teilweise gasdurchlässigem Material sowie ein Herstellungsverfahren für eine solche Filterlage. Darüber hinaus werden vorteilhafte Ausgestaltungen von Wabenkörpern und Abgasreinigungsvorrichtungen beschrieben, insbesondere zur Behandlung von Kraftfahrzeug-Abgasen.

Bei der Reinigung von Abgasen mobiler bzw. stationärer Verbrennungskraftmaschinen steht neben der chemischen Umwandlung von gasförmigen Schadstoffen auch die Zurückhaltung bzw. Umwandlung von Partikeln (wie Ruß, Asche und dergleichen) im Fokus des derzeitigen Interesses. Zur Reduktion von Partikel-Emissionen sind Rußfilter bekannt, welche aus einem keramischen Substrat aufgebaut sind, die Kanäle aufweisen, in welche das zu reinigende Abgas einströmen kann. Benachbarte Kanäle sind wechselseitig verschlossen, so dass das Abgas auf der Eintrittsseite in den Kanal eintritt, durch eine keramische Wand hindurchtritt und über einen benachbarten Kanal auf der Austrittsseite wieder entweicht. Dieses Konzept hat den Nachteil, dass eine sichere Regeneration des Rußfilters im Abgassystem eines Automobils immer noch Probleme bereitet. Die Regeneration des Rußfilters ist erforderlich, da die zunehmende Ansammlung von Partikeln in den zu durchströmenden Kanalwänden einen stetig steigenden Druckverlust zur Folge hat, der negative Auswirkungen auf die Motorleistung hat. Die Regeneration umfasst das kurzzeitige Aufheizen des Rußfilters bzw. der darin angesammelten Partikel, so dass die Partikel in gasförmige Bestandteile umgesetzt werden. Eine solche Regeneration hat eine hohe thermische Beanspruchung des Rußfilters zur Folge, weshalb mit einer reduzierten Lebensdauer zu rechnen ist.

Zur Vermeidung dieser diskontinuierlichen und thermisch sehr verschleißfördernden Regeneration wurde ein System zur kontinuierlichen Regeneration von Filtern entwickelt (CRT: "continuous regeneration trap"). In einem solchen System werden die Partikel bei Temperaturen bereits oberhalb von 200°C mittels Oxidation mit NO₂ verbrannt. Das hierzu erforderliche NO₂ wird im Abgas häufig durch einen Oxidationskatalysator erzeugt, der stromaufwärts vor der Partikelfalle angeordnet ist. Zur Bereitstellung der erforderlichen Menge NO₂ können auch Additive dem Abgas zugeführt werden (z. B. Harnstoff).

Weiterhin wurde erkannt, dass die Umsetzung der Schadstoffe im Abgas dann verbessert wird, wenn eine hohe Verweilzeit der noch nicht umgesetzten Partikel im Filter gewährleistet wird. In diesem Zusammenhang wurde ein Konzept entwickelt, welches im wesentlichen unter dem Begriff "offenes Filtersystem" bekannt geworden ist. Das offene Filtersystem zeichnen sich dadurch aus, dass auf ein konstruktives, wechselseitiges Verschließen aller Filterkanäle verzichtet wird. Es wird vorgesehen, dass die Kanalwände zumindest teilweise aus porösem Material aufgebaut sind, und dass die Strömungskanäle des offenen Filters Umlenk- oder Leitstrukturen aufweisen. Diese Einbauten bewirken, dass die Strömung bzw. die darin enthaltenen Partikel hin zu den Bereichen aus porösem Material gelenkt werden. Dabei hat sich überraschenderweise herausgestellt, dass die Partikel zu einem sehr großen Anteil an und/oder in der porösen Kanalwand haften bleiben. Für das Zusammenkommen dieser Wirkungen sind Druckunterschiede im Strömungsprofil des strömenden Abgases von Bedeutung. Durch die Umlenkung können zusätzlich lokale Unterdruck- oder Überdruckverhältnisse entstehen, die zu einem Filtrationseffekt durch die poröse Wand hindurch führen.

Die Partikelfalle ist im Gegensatz zum dem bekannten geschlossenen Sieb- oder Filtersystemen offen, weil keine Strömungssackgassen vorgesehen sind. Die Eigenschaft kann somit auch zur Charakterisierung derartiger Partikelfallen dienen, so dass beispielsweise der Parameter "Strömungsfreiheit" zur Beschreibung geeignet ist. So bedeutet eine Strömungsfreiheit von 20 %, dass in einer (bzw. jeder) Querschnittsbetrachtung ca. 20 % der Fläche nicht verschlossen sind. Zur Veranschaulichung dieser Konzepte wird insbesondere auf die Veröffentlichungen WO 2004/050219 und DE 201 17 873 U1 verwiesen, deren Inhalt zur Ergänzung der Beschreibung des Aufbaus einer offenen Partikelfalle hier mit einbezogen ist. Insbesondere bei der Herstellung von offenen Partikelfallen haben sich metallische Materialien als besonders flexibel erwiesen, so dass derartige Partikelfallen bevorzugt mit metallischen Folien und/oder metallischen Filterlagen ausgeführt sind.

Im Hinblick auf die unterschiedlichen Einsatzgebiete für derartige Abgasreinigungsvorrichtungen und Partikelfallen sind eine Vielzahl unterschiedlicher Formen und Gestalten bereitzustellen. So können (metallische) lagenweise aufgebaute Abgasreinigungsvorrichtungen als Stapel, als Wickelung, und dergleichen ausgeführt sein. Regelmäßig wird dabei eine Filterlage aus zumindest teilweise gasdurchlässigem Material eingesetzt, die entsprechend der gewünschten Form der Abgasreinigungsvorrichtung gestaltet bzw. positioniert ist. Zur Vermeidung kostenintensiver Herstellungsverfahren bezüglich der Filterlage war es bislang üblich, lediglich Band- oder Rechteck-förmige Filterlagen zur Herstellung von Abgasreinigungsvorrichtungen einzusetzen.

Die US-A1-2003/0086837 zeigt eine Partikelfalle, die aus Filterlagen aufgebaut ist. Die Filterlagen sind segmentiert und derart aneinandergefügt, dass die Filterlage gegenüberliegende Kanten unterschiedlicher Länge aufweist.

Die US-A1-2003/0202919 beschreibt einen Wabenkörper, der durch ein Verfahren hergestellt ist, dass die Schritte Bereitstellen eines bandförmigen metallischen Bleches, Trennen des Bleches in mehrere Segmente, Anordnen der Segmente, so dass Lagen mit gegenüberliegenden Kanten unterschiedlicher Länge gebildet sind, umfasst.

Hiervon ausgehend ist es Aufgabe der vorliegenden Erfindung, die mit Bezug auf den Stand der Technik bekannten technischen Probleme zumindest teilweise zu lindern oder zu lösen. Insbesondere soll eine Filterlage vorgeschlagen werden, die die Herstellung von Abgasreinigungsvorrichtungen, insbesondere von Partikelfallen für den Automobilbereich, vereinfachen soll, wobei insbesondere die Vielfalt der Ausgestaltungen, Formen und Varianten der Abgasreinigungsvorrichtung gewährleistet sein soll. Darüber hinaus soll eine kostengünstige und flexible Fertigung solcher Filterlagen gesichert sein.

Diese Aufgaben werden gelöst mit einer Filterlage gemäß den Merkmalen des Patentanspruchs 1 sowie einem Verfahren zur Herstellung einer Filterlage mit den Merkmalen des Patentanspruchs 8 Weitere vorteilhafte Ausgestaltungen und Anwendungen sind in den abhängig formulierten Patentansprüchen beschrieben. Es ist darauf hinzuweisen, dass die in den Patentansprüchen einzeln aufgeführten technischen Merkmale in beliebiger, technologisch sinnvoller, Weise miteinander kombiniert werden können, wobei weitere Ausgestaltungen der Erfindung aufgezeigt werden.

Erfindungsgemäß umfasst die Filterlage aus zumindest teilweise gasdurchlässigem Material eine Mehrzahl von Segmenten, die so aneinandergefügt sind, dass die Filterlage gegenüberliegende Kanten unterschiedlicher Länge aufweist.

Die Filterlage besteht bevorzugt aus einem hochtemperaturfesten und korrosionsbeständigen Material, so dass die Filterlage gerade auch den thermischen und dynamischen Belastungen im Abgassystem eines Kraftfahrzeugs standhalten kann. Dabei handelt es sich bevorzugt um einen Stahlwerkstoff, der beispielsweise hohe Anteile von Aluminium (z.B. mind. 4,5 Gew.-%), Chrom (z.B. um 19 Gew.-%) und/oder Nickel aufweist, es ist jedoch auch möglich, dass der Werkstoff eine Keramik oder einen Keramik-ähnlichen Werkstoff umfasst. Das gasdurchlässige Material selbst kann die Werkstoffkomponenten Pulver, Fasern, und/oder Mischformen davon umfassen. Diese Werkstoffkomponenten sind bevorzugt miteinander stoffschlüssig verbunden, insbesondere miteinander verschweißt und/oder miteinander hartgelötet und/oder miteinander gesintert.

Im Hinblick auf die "Gasdurchlässigkeit" des Materials ist anzumerken, dass die Filterlage auch Bereiche (z.B. höchstens 20% der gesamten Fläche) mit gasundurchlässigem Material aufweisen kann, diese sind jedoch bevorzugt an mindestens einem Rand der Filterlage ausgebildet. Darüber hinaus ist auch möglich, dass die Filterlage mit einer Art Stützstruktur (z. B. einem Streckmetall) ausgeführt ist, die selbst gasundurchlässig ist, jedoch eine Mehrzahl von Teilbereichen mit gasdurchlässigem Material umfasst. Weiter ist auch möglich, dass im Bereich der Fügebereiche benachbarter Segmente ein Verbindungsbereich ausgeführt ist, der zumindest eine reduzierte Gasdurchlässigkeit aufweist oder gegebenenfalls sogar gasundurchlässig ist.

Bevorzugt handelt es sich bei dem gasdurchlässigen Material um ein metallisches Fasermaterial. Mit dem Begriff "Fasern" sind langgestreckte metallische Elemente gemeint, wie beispielsweise Drähte, Fäden, Fasern und dergleichen. Die metallischen Fasern sind bevorzugt mit einer Faserlänge im Bereich von 0,1 mm bis 50 mm (insbesondere in einem Bereich von 1 mm bis 10 mm) und einem Faserdurchmesser im Bereich von 0,01 mm bis 0,1 mm (insbesondere in einem Bereich von 0,02 mm bis 0,05 mm) ausgeführt. Die metallischen Fasern umfassen insbesondere einen Werkstoff, der im Wesentlichen Stahl als Grundwerkstoff umfasst, wobei bevorzugt hohe Anteile von Chrom (z. B. in einem Bereich von 18 bis 21 Gew.- %) und/oder Aluminium (z. B. mindestens 4,5 Gew.- %, insbesondere mindestens 5,5 Gew.- %) vorgesehen sind. Innerhalb einer Filterlage können unterschiedliche Schichten mit verschiedenen Ausgestaltungen (z.B. hinsichtlich Länge, Material, Querschnittsform, Orientierung, etc.) der Fasern vorgesehen sein. Die Porosität eines solchen Faservlieses liegt bevorzugt in einem Bereich von 60 bis 85 %.

Die erfindungsgemäße Filterlage weist nun eine Mehrzahl von Segmenten auf, so dass die Filterlage beispielsweise mit mehr als drei (3), fünf (5) oder sieben (7) Segmenten ausgebildet ist. Die Segmente weisen bevorzugt die gleichen Filtereigenschaften bzw. das gleiche gasdurchlässige Material auf, dies ist jedoch nicht zwingend der Fall. Die Segmente sind bevorzugt ein flächiges Gebilde mit den gewünschten Abmessungen. Jedes dieser Segmente ist mit mindestens einem weiteren Segment, bevorzugt unverlierbar, verbunden. Damit lässt sich die letztendliche Gestalt der Filterlage stark variieren, in dem die Segmente beispielsweise nach Art eines "Flickenteppichs" zusammengesetzt werden.

So ist es nun möglich, dass die Filterlage mit gegenüberliegenden Kanten unterschiedlicher Länge ausgeführt ist. Stellt die eine Kante beispielsweise eine Gerade dar, so kann die gegenüberliegende Kante als gekrümmte Linie (z.B. mit einem geschwungenen und/oder eckigen Profil) ausgeführt sein. Bei der Ausgestaltung der Filterlage als flächiges Gebilde beschreiben die Kanten bevorzugt die größte Ausdehnung der Filterlage in der Ebene. War es bislang erforderlich, für jede solcher Spezialformen der Filterlage ein eigenes Werkzeug, insbesondere ein Stanzwerkzeug oder eine komplizierte, flexible ansteuerbare Schneidemaschine, bereit zu stellen. Nun aber sind die unterschiedlichen Ausgestaltungen der Filterlage durch Aneinanderfügen der Segmente herstellbar. Dies hat einerseits eine kostengünstige und andererseits eine flexible Herstellung von unterschiedlichen Filterlagen auch im Rahmen einer Serienfertigung zur Folge.

Gemäß einer weiteren Ausgestaltung der Filterlage weist mindestens ein Segment die Form eines Trapezes auf. Bevorzugt ist dieses Trapez gleichschenklig ausgeführt. Eine solche Ausgestaltung der Segmente lässt sich einerseits leicht aus einem bandförmigen Rohmaterial erzeugen und erlaubt andererseits die Ausbildung komplexerer Formen der Filterlage.

Weiter wird auch vorgeschlagen, dass die Segmente eine gleich große Filterfläche bilden. Dies führt später im Einsatz einerseits zu einem gleichmäßigen Filterwirkungsgrad und zum anderen hat dies eine vereinfachte Handhabung der Segmente beispielsweise beim Lagern, Transport und der Herstellung von Filterlagen zur Folge. Die Filterfläche der Segmente liegt beispielsweise in einem Bereich von 100 bis 1000 cm².

Nach einer weiteren Ausgestaltung der Filterlage hat diese die Form eines Kreisringsegmentes. Das heißt mit anderen Worten, dass die gegenüberliegenden Kanten im wesentlichen die Form eines Kreisbogenabschnittes aufweisen, die konzentrisch zueinander angeordnet sind, wobei die Kreisbogenabschnitte mit unterschiedlicher Länge ausgeführt sind. Eine solche Form der Filterlage, bei der die Segmente vorteilhafterweise in einer Reihe angeordnet sind, erlaubt beispielsweise die kostengünstige Herstellung von Wabenkörpern mit einer konischen Form.

Gemäß einer weiteren Ausführung der Filterlage sind wenigstens ein Teil der Mehrzahl der Segmente miteinander direkt stoffschlüssig verbunden. Das heißt mit anderen Worten, dass hier auf Zwischenelemente zwischen den Segmenten verzichtet wird und eine direkte Verbindung des jeweiligen gasdurchlässigen Materials vorgesehen ist. Die Verbindung umfasst insbesondere Hartlöt-, Schweiß- und/oder Sinterverbindungen.

Erfindungsgemäß weist die Filterlage im Bereich wenigstens einer Kante einen gasundurchlässigen Kragen auf Bevorzugt ist dabei die Ausgestaltung, bei der beide gegenüberliegenden Kanten über die gesamte Länge jeweils mit einem Kragen ausgeführt sind. Dabei ist der Kragen bevorzugt mit einer Metallfolie gebildet, die um die jeweilige Kante umgeschlagen und mit dem Material der Filterlage fügetechnisch, insbesondere stoffschlüssig, verbunden ist. Mit einem solchen Kragen wird einerseits beispielsweise ein Verbindungsbereich zur Anbindung mehrerer Filteranlagen mittels Hartlöten bereitgestellt, andererseits dient der Kragen gleichzeitig als Schutz dafür, dass sich aufgrund der hohen thermischen und dynamischen Belastungen im Abgassystem eines Kraftfahrzeugs Teile des gasdurchlässigen Materials herauslösen. Die Metallfolie hat bevorzugt eine Breite im Bereich von 5 bis 30 mm. Es sei darauf hingewiesen, dass es nicht erforderlich ist, dass der Kragen zumindest ein Teil des gasdurchlässigen Materials der Filterlage umschließt, es ist vielmehr auch möglich, dass sich der Kragen an die Kante anschließt bzw. einseitig auf dem gasdurchlässigen Material aufliegt.

Besonders vorteilhaft ist es, wenn ein Wabenkörper mindestens eine Ausgestaltung der erfindungsgemäß beschriebenen Filterlage umfasst, wobei mindestens eine zumindest teilweise strukturierte Metallfolie und ein konisch geformtes Gehäuse vorgesehen sind, und die mindestens eine Filterlage und die mindestens eine Metallfolie so im Gehäuse angeordnet sind, dass eine Vielzahl von Kanälen gebildet ist, die jeweils einen sich verändernden Kanalquerschnitt aufweisen.

Im Hinblick auf die Ausgestaltung eines konisch geformten Wabenkörpers wird hier auf die WO 97/49905 verwiesen, die ausdrücklich zur Veranschaulichung der Geometrien hier ergänzend herangezogen wird. Für die Herstellung eines solchen Wabenkörpers wird insbesondere für die glatte Filterlage eine Form benötigt, die in etwa der Form eines Kreisringsegmentes entspricht. Wie diese kostengünstig und sehr flexibel herstellbar ist, wurde vorstehend erläutert. Die Integration einer so hergestellten Filterlage in einen konisch geformten Wabenkörper ermöglicht somit eine kostengünstige Herstellung.

Ergänzend ist noch darauf hinzuweisen, dass mit einem sich verändernden Kanalquerschnitt insbesondere meint, dass eine kontinuierliche Verkleinerung bzw. Vergrößerung des Kanalquerschnitts von einer Stirnseite des Wabenkörpers hin zur gegenüberliegenden Stirnseite vorliegt. Gleichwohl ist aber auch möglich, dass sich der Kanalquerschnitt nur lokal in einem Abschnitt des Kanals verändert, beispielsweise durch in den Kanal hineinragende Teile der Metallfolie (wie Leitflächen, Ausbuchtungen oder ähnliches). Ganz besonders bevorzugt ist die Kombination eines sich kontinuierlich veränderndem Kanalquerschnitts mit lokalen Kanalquerschnittsengstellen.

In diesem Zusammenhang wird auch vorgeschlagen, dass die Kanäle wenigstens an einer Stelle zumindest teilweise verschlossen sind. Damit ist einerseits z. B. gemeint, dass im Inneren der Kanäle (eine mögliche "Stelle") Strömungsbeeinflusser vorgesehen sind, also beispielsweise Leitflächen, Einbuchtungen und ähnliches. Weiter ist auch möglich, dass Zusatzmaterialien im Inneren der Kanäle platziert sind, z. B. Strömungssperren, Siebe, Filtermaterialien, etc.. Als weitere "Stelle" zum teilweisen Verschließen der Kanäle bieten sich die Kanäle in angrenzenden Bereichen zu den Stirnseiten des Wabenkörpers an. Diese könnten nach Art eines Stopfens wirken und den Eintritt bzw. Austritt von Abgas behindern bzw. verhindern. Mit einem "teilweisen" Verschließen kann gemeint sein, dass der Kanal vollständig und/oder teilweise mit einem gasundurchlässigen und/oder einem gasdurchlässigen Material ausgeführt ist. Bevorzugt ist hierbei die Ausgestaltung, wobei alle Kanäle nur teilweise durch Strömungsbeeinflusser verschlossen sind.

Gemäß einem weiteren Aspekt der Erfindung wird ein Verfahren zur Herstellung einer Filterlage aus zumindest teilweise gasdurchlässigem Material vorgeschlagen, welches zumindest die folgenden Schritte umfasst:
a) Bereitstellen eines bandförmigen metallischen Faservlieses;
b) Trennen des Faservlieses in mehrere Segmente;
c) Anordnen der mehreren Segmente so, dass die Filterlage mit gegenüberliegenden Kanten unterschiedlicher Länge gebildet wird;
d) Verbinden der mehreren Segmente.
Dieses Verfahren wird bevorzugt zur Herstellung einer Ausführungsform der erfindungsgemäß beschriebenen Filterlage eingesetzt.

Gemäß Schritt a) wird zunächst ein im wesentlichen bandförmiges metallisches Faservlies bereitgestellt. Im Hinblick auf die bevorzugten Ausgestaltungen eines solchen metallischen Faservlieses ist auf die oben genannten Parameter zu verweisen. Dieses metallische Faservlies wird nun gemäß Schritt b) in mehrere Segmente getrennt, wobei dies mit geeigneten Schneid- und/oder Trennvorrichtungen erfolgen kann, die gegebenenfalls auch zur Durchführung von thermischen Trennverfahren geeignet sind. Diese mehreren Segmente werden nun (Schritt c)) so angeordnet, dass die Filterlage mit gegenüberliegenden Kanten unterschiedlicher Länge gebildet wird. Das "Anordnen" umfasst insbesondere eine zueinander Positionieren, ein Vorfixieren, ein Ausrichten und ähnliche Vorgänge, um die Filterlage, beispielsweise nach Art eines "Flickenteppichs", zusammen zu setzen. Die so vorpositionierten Segmente werden nun einzeln oder gemeinsam miteinander zur Filterlage verbunden (Schritt d)). Das hier beschriebene Verfahren erlaubt die kostengünstige Herstellung von einer Vielzahl unterschiedlicher Formen von Filterlagen. Das Verfahren kann weiterhin auch in einen kontinuierlichen Prozess integriert werden, beispielsweise im Rahmen einer Serienfertigung von Wabenkörpern für Abgasreinigungsvorrichtungen, wobei das Faservlies bzw. die Segmente während der Durchführung des hier beschriebenen Verfahrens mit einem im wesentlichen gleich bleibenden Vorschub transportiert wird.

Erfindungsgemäß wird zwischen Schritt a) und Schritt b) des Verfahrens noch der Schritt ab) durchgeführt, der das Anbringen eines gasundurchlässigen Kragens im Bereich wenigstens einer Kante des Vlieses umfasst. Im Hinblick auf die bevorzugte Ausgestaltung eines solchen Kragens ist auf die vorstehenden Erläuterungen zum Metallfolien-Umschlag zu verweisen. Auch das Anbringen dieses gasundurchlässigen Kragens erfolgt bevorzugt kontinuierlich.

Eine Weiterbildung des Verfahrens betrifft die Ausprägung des Schrittes b) in der Art, dass ein Schneiden des Faservlieses umfasst ist, dass bezüglich einer Mittelachse eines Segmentes schräge und spiegelbildliche Schnittverläufe erzeugt werden. Damit können insbesondere gleichschenklige Trapeze oder Segmente nach Art eines Kreisringsegmentes erzeugt werden. Zur Herstellung der schrägen, spiegelbildlichen Schnittverläufe können beispielsweise so genannte "fliegende Messer" oder ähnliche Konstruktionen eingesetzt werden, die einen Schnittvorgang quer zur Vorschubrichtung und während eines kontinuierlichen Vorschubs des Faservlieses ermöglichen. Grundsätzlich können auch herkömmliche Stanzen, Laser-Schneidwerkzeuge und ähnliches zum Schneiden des Faservlieses eingesetzt werden.

Weiter wird auch vorgeschlagen, dass Schritt c) ein wechselseitiges Positionieren der Segmente umfasst. Damit ist insbesondere der Fall gemeint, dass ein bandförmiges Faservlies in trapezförmige Segmente unterteilt wird, beispielsweise durch die Erzeugung schräger und spiegelbildlicher Schnittverläufe, wobei jedes zweite Segment aus dem Faservlies über dessen Kanten umgeklappt bzw. umgedreht wird. Werden nun die einzelnen Segmente bezüglich ihrer Seiten aneinander ausgerichtet, so erhält die Filterlage selbst einen gekrümmten Verlauf und entspricht einer Form gemäß einem Kreisringsegment.

Besonders vorteilhaft ist es, dass zumindest einer der Verfahrensschritte ab) und d) ein Verschweißen mittels Rollnahtschweißen umfasst. Damit ist also entweder die Anbringung des Kragens und/oder das direkte Verbinden der Segmente aus gasdurchlässigem metallischen Material gemeint. Zur Ausgestaltung des Rollnahtschweiß-Prozesses wird ergänzend auf den Offenbarungsinhalt der WO 2005/019617 A1 verwiesen. Die dortigen Erläuterungen sollen hier zur Beschreibung des Rollnahtschweiß-Prozesses vollständig integriert sein.

Nach einer vorteilhaften Ausgestaltung des Verfahrens wird als zusätzlicher Schritt e) eine Seitenendbearbeitung vorgenommen, bei der mindestens eine Seite der Filterlage eine vorgegebene Form erhält. Mit "Seite" sind insbesondere die sich an die Kanten anschließenden Begrenzungen der Filterlage bzw. des Segmentes gemeint. Diesen Seitenendbearbeitungs-Prozess könnte mit "Säumen" bezeichnet werden, der also insbesondere das Abtrennen von Fasern, das Verdichten von Teilbereichen der Filterlage und ähnliches umfasst. Auf diese Weise sollen Formtoleranzen und/oder vorgegebene Lebensdauer-Kriterien sichergestellt werden.

Als besonders bevorzugter Anwendungsbereich wird eine Abgasreinigungsvorrichtung zum zumindest teilweisen Aufhalten und zumindest teilweisen Umsetzen von Partikeln eines Abgasstromes einer Verbrennungskraftmaschine eines Kraftfahrzeuges vorgeschlagen, die wenigstens umfasst:
- zumindest eine Filterlage der vorstehend beschriebenen Art bzw. die mit dem vorstehend beschriebenen Verfahren hergestellt wurde, oder
- zumindest einen Wabenkörper, wie er oben erläutert wurde.

Die Erfindung sowie das technische Umfeld werden nachfolgend anhand der Figuren näher erläutert. Es ist darauf hinzuweisen, dass die Figuren sich auf besonders bevorzugte Ausführungsvarianten der Erfindung beziehen, die Erfindung jedoch nicht darauf begrenzt ist. Insbesondere können die in den Figuren veranschaulichten Größendimensionen nicht als maßstabsgerecht angesehen werden. Es zeigen schematisch:
- Fig. 1:: perspektivisch einen konischen Wabenkörper;
- Fig. 2:: eine Filterlage in Form eines Kreisringsegmentes;
- Fig. 3:: ein Faservlies;
- Fig. 4:: ein Faservlies mit Kragen;
- Fig. 5:: ein in Segmente unterteiltes Faservlies mit Kragen;
- Fig. 6:: eine Filterlage mit gegenüberliegenden Kanten unterschiedlicher Länge;
- Fig. 7:: ein Detail eines konischen Wabenkörpers;
- Fig. 8:: einen Querschnitt durch eine Ausführungsvariante eines konischen Wa- benkörpers; und
- Fig. 9:: ein Kraftfahrzeug mit einem Abgassystem.

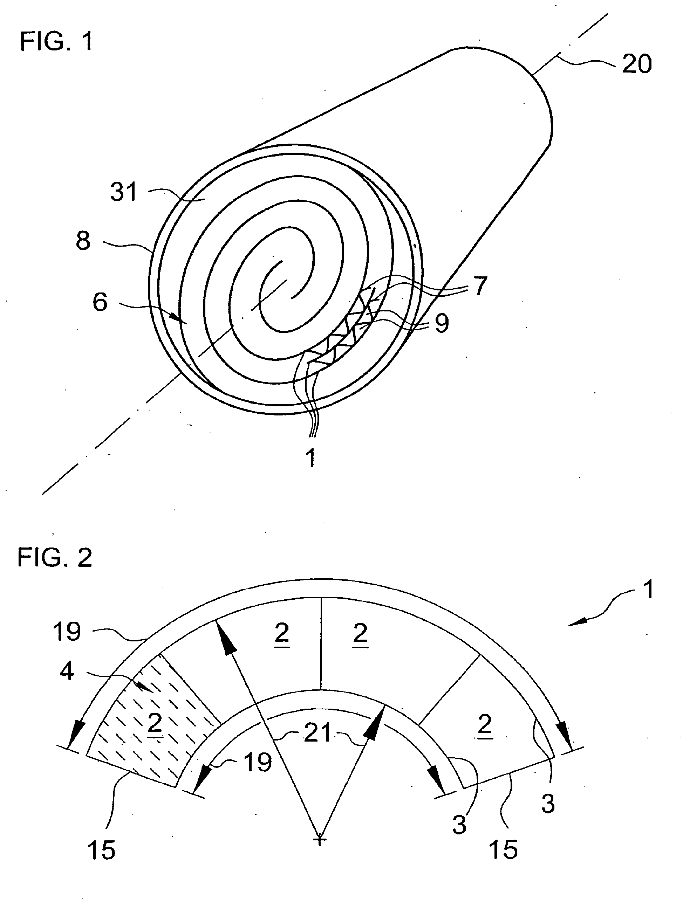

Fig. 1 zeigt einen Wabenkörper 6, der mehrere Filterlagen 1 und mehrere vollständig strukturierte Metallfolien 7 umfasst, die so gewickelt bzw. gewunden sind, dass sie einerseits für ein Abgas durchströmbare Kanäle 9 bilden und andererseits in einem konisch geformten Gehäuse 8 untergebracht sind. Die Kanäle 9 erstrecken sich zwischen den beiden Stirnseiten 31 des Wabenkörpers 6, wobei sie im wesentlichen gradlinig verlaufen. Aufgrund der konischen Ausgestaltung des Wabenkörpers 6 verlaufen die Kanäle 9 jedoch nicht exakt parallel zur Zentralachse 20 des Wabenkörpers 6, sondern sind zu der Zentralachse 20 geneigt.

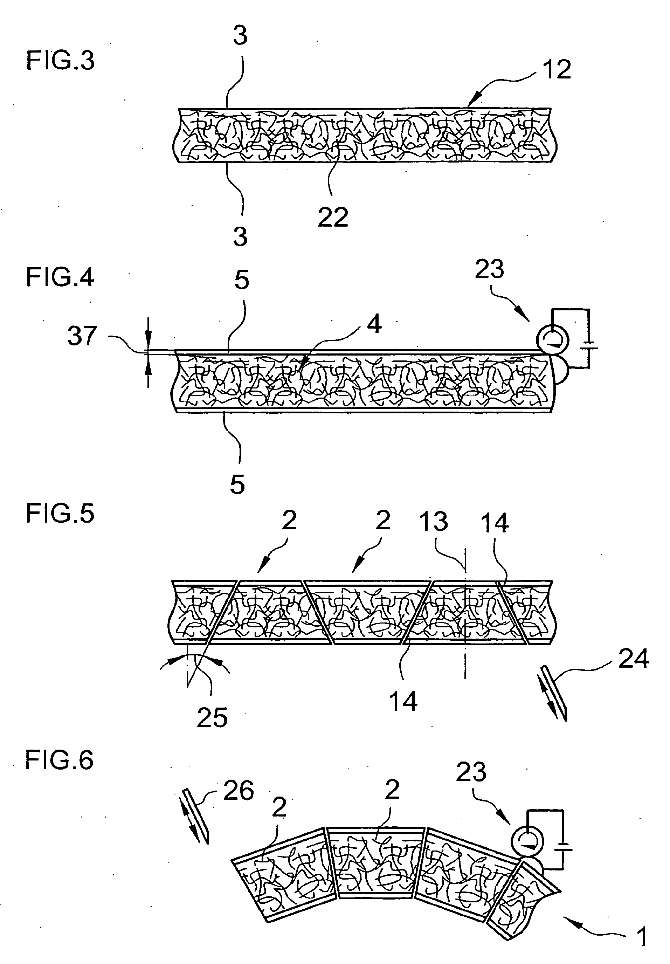

Fig. 2 veranschaulicht eine Filterlage 1 aus einem gasdurchlässigen Material, hier ein metallisches Faservlies, die mit mehreren Segmenten 2 gebildet ist, wobei die Segmente 2 so aneinandergefügt sind, dass die Filterlage 1 mit gegenüberliegenden Kanten 3 unterschiedlicher Länge 19 ausgeführt ist. Bei der veranschaulichten Form der Filterlage 1 ist die Form eines Kreisringsegmentes verwirklicht, wobei die gegenüberliegenden Kanten 3 der Filterlage 1 einen voneinander verschiedenen Krümmungsradius 21 umfassen. Dadurch wird eine "innere" Länge 19 (in Fig. 2 unten dargestellt) erzeugt, die kleiner ist als die "äußere" Länge 19 (in Fig. 2 oben dargestellt). Die Segmente 2 weisen im wesentlichen dieselbe Filterfläche 4 auf, ebenso sind die Seiten 15 mit einer gleichen Erstreckung ausgeführt. Gerade letzteres ist nicht zwingend erforderlich. Die Figuren 3 bis 6 veranschaulichen ein Verfahren zum Herstellen einer Filterlage 1 aus gasdurchlässigem Material.

Fig. 3 zeigt das Bereitstellen eines bandförmigen metallischen Faservlieses 12. Das Faservlies 12 weist eine Vielzahl von metallischen Fasern 22 auf, die bevorzugt nach Art einer Wirrlage miteinander verschweißt bzw. gesintert sind. Bei der bandförmigen Ausgestaltung des Faservlieses 12 liegen die späteren Kanten 3 in Erstreckungsrichtung des bandförmigen Faservlieses 12.

Fig. 4 veranschaulicht das Anbringen eines gasundurchlässigen Kragens 5 im Bereich der beiden gegenüberliegenden Kanten 3 des Faservlieses 12. Dazu wird eine Metallfolie (nicht gekennzeichnet) zur Bildung des Kragens 5 um die Kanten 3 des Faservlieses umgeschlagen, so dass sie sich über eine Breite 37 des Faservlieses 12 erstreckt. Diese Metallfolie bzw. der Kragen 5 wird mittels einer Rollnahtschweißanlage 23 unverlierbar mit dem Faservlies 12 verbunden. Damit wird nunmehr die Filterfläche 4 durch die beiden Kragen 5 begrenzt.

In einem weiteren Verfahrensschritt (siehe Fig. 5) wird das Faservlies 12 in mehrere Segmente 2 getrennt. Dies erfolgt beispielsweise mit der schematisch angedeuteten Trennvorrichtung 24 die in der Lage ist, das Faservlies 12 zu zerteilen. Bei der veranschaulichten Variante wird das Faservlies 12 in der Art geschnitten, dass bezüglich der Mittelachse 13 des Segmentes 2 schräge und spiegelbildliche Schnittverläufe 14 erzeugt werden. Der schräge Schnittverlauf 14 kann anhand eines Winkels 25 charakterisiert werden, der bevorzugt in einem Bereich von 2 bis 15 Grad liegt.

Schließlich veranschaulicht Fig. 6 nun das Anordnen der mehreren Segmente 2 in der Art, dass die Filterlage 1 mit gegenüberliegenden Kanten 3 unterschiedlicher Länge 19 gebildet wird, sowie das anschließende Verbinden der Segmente 2, das wiederum mit einer Rollnahtschweißanlage 23 durchgeführt wird. Bei der hier dargstellten Variante werden die zuvor erzeugten Segmente 2 wechselweise positioniert, so dass sich eine Variante der Filterlage 1 nach Art eines Kreisringsegmentes ergibt. Eine Seitenendbearbeitung wird mittels der dargestellten Formgebungseinrichtung 26 bewirkt.

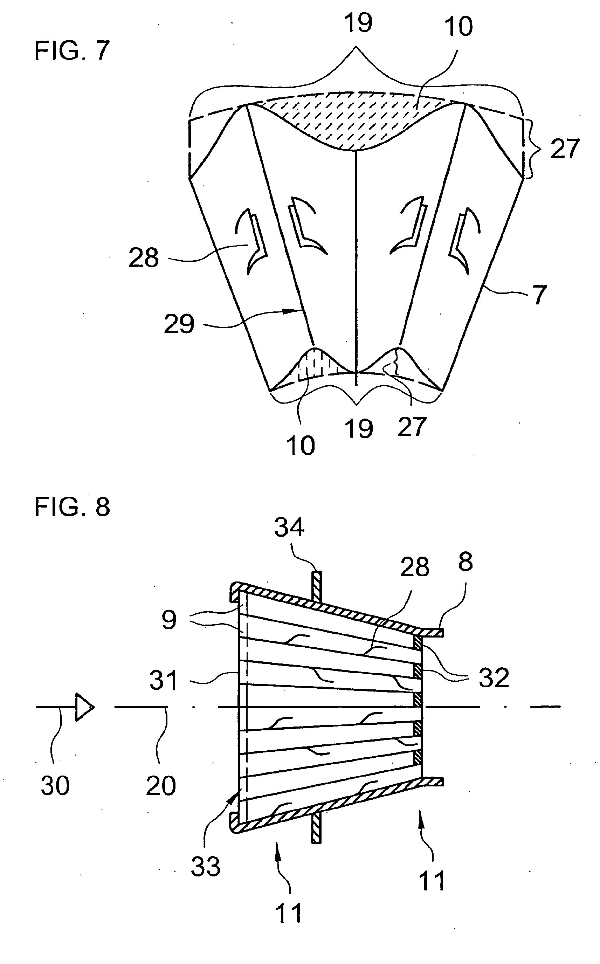

Zur Veranschaulichung des Aufbaus eines Wabenkörpers 6 ist in Fig. 7 ein Detail dargestellt. Diese Metallfolie 7 ist mit einer Struktur 29 ausgeführt, wobei eine glatte Filterlage 1 sich an den Extrema, z. B. Wellenbergen und Wellentälern, dieser Struktur 29 anschmiegt, was durch die gestrichelte Linie veranschaulicht werden soll. Damit begrenzen die Filterlage 1 und die Metallfolie 7 Kanäle 9 mit einem vorgegebenen Kanalquerschnitt 10. Aufgrund der konischen Ausgestaltung des Wabenkörpers 6 bzw. den unterschiedlichen Längen 19 der Kanten 3 der Filterlage 1 variiert die Höhe 27 bzw. die Größe des Kanalquerschnitts 10 in Kanalrichtung. Zur weiteren gezielten Beeinflussung des Abgasstromes ist die Metallfolie 7 mit Strömungsbeeinflussern 28 ausgeführt, die neben und/oder in den Extrema der Struktur 29 vorgesehen sein können. Ergänzend ist noch darauf hinzuweisen, dass die Metallfolie 7 mit einem anderen Material ausgeführt sein kann, beispielsweise auch als Filterlage 1 aus einem gasdurchlässigen Material.

Die Fig. 8 soll zur weiteren Veranschaulichung der Strömungsverhältnisse durch einen solchen konischen Wabenkörper 6 dienen. Das Abgas strömt in einer Strömungsrichtung 30 hin zu einer ersten Stirnseite 31. Dort tritt das Abgas in die Vielzahl von Kanälen 9 ein, die zumindest teilweise mit einer Filterlage 1 begrenzt sind. Die Strömungsbeeinflusser 28 sowie die dargestellten Verschlusselemente 32 verschließen zumindest einen Teil der Kanäle 9 teilweise, so dass das Abgas wiederholt zur Strömungsumlenkung gezwungen ist und damit zumindest die Wahrscheinlichkeit erhöht wird, dass das Abgas durch die Filterlage 1 hindurchtritt. Auf diese Weise können die Partikel, die im Abgas mitgeführt werden, relativ leicht eingefangen werden, wobei ein Verstopfen des Filters regelmäßig nicht befürchtet werden muss. Es wird auch veranschaulicht, dass es sowohl Stellen 11 im Inneren der Kanäle 9 geben kann, wo eine Kanalverengung auftritt, und außerdem im Endbereich nahe wenigstens einer Stirnseite 31 ebenfalls eine Stelle 11 durch die Verschlusselemente 32 gebildet ist. Die Ausgestaltung bzw. Positionierung der Strömungsbeeinflusser 28 und/oder der Verschlusselemente 32 kann anwendungsspezifisch frei gewählt werden. In der gezeigten Ausführungsvariante ist das konisch geformte Gehäuse zusätzlich mit einem Vorsprung 34 ausgeführt, der insbesondere zur Montage des Wabenkörpers 6 in einem Abgassystem eines Automobils, bevorzugt in Motomähe, dient.

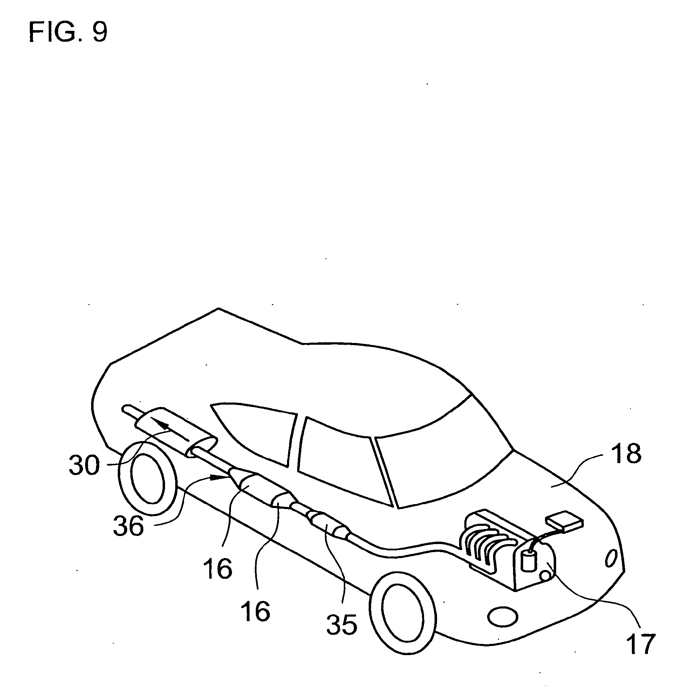

Fig. 9 veranschaulicht schematisch ein Kraftfahrzeug 18 mit einer Verbrennungskraftmaschine 17, bevorzugt ein Dieselmotor, dessen Abgas in einer Strömungsrichtung 30 durch mehrere Abgasreinigungsvorrichtungen 16 hindurchgeführt wird. Nach Durchströmen eines Oxidationskatalysators 35 tritt das Abgas in einen Konus 36, in dem eine Abgasreinigungsvorrichtung 16 mit der hier beschriebenen Filterlage vorgesehen ist. Daran schließt sich beispielsweise eine weitere Abgasreinigungsvorrichtung 16 (3-Wege-Katalysator, Adsorber, Rußfilter, etc.) an, bevor das Abgas über einen weiteren Konus 36 schließlich in den Schalldämpfer überführt wird und in die Umgebung gereinigt austritt.

Die hier beschriebene Filterlage ermöglicht eine kostengünstige Herstellung und einer vorteilhafte Integration damit gebildeter Partikelfallen als Abgasreinigungsvorrichtungen in Abgassystemen von Kraftfahrzeugen.

### Bezugszeichenliste

- 1: Filterlage
- 2: Segment
- 3: Kante
- 4: Filterfläche
- 5: Kragen
- 6: Wabenkörper
- 7: Metallfolie
- 8: Gehäuse
- 9: Kanal
- 10: Kanalquerschnitt
- 11: Stelle
- 12: Faservlies
- 13: Mittelachse
- 14: Schnittverlauf
- 15: Seite
- 16: Abgasreinigungsvorrichtung
- 17: Verbrennungskraftmaschine
- 18: Kraftfahrzeug
- 19: Länge
- 20: Zentralachse
- 21: Krümmungsradius
- 22: Faser
- 23: Rollnahtschweißanlage
- 24: Trennvorrichtung
- 25: Winkel
- 26: Formgebungseinrichtung
- 27: Höhe
- 28: Strömungsbeeinflusser
- 29: Struktur
- 30: Strömungsrichtung
- 31: Stirnseite
- 32: Verschlusselement
- 33: Lötbereich
- 34: Vorsprung
- 35: Oxidationskatalysator
- 36: Konus
- 37: Breite

## Patentansprüche

1. Filterlage (1) aus zumindest teilweise gasdurchlässigem Material, umfassend eine Mehrzahl von Segmenten (2), die so aneinandergefügt sind, dass die Filterlage (1) gegenüberliegende Kanten (3) unterschiedlicher Länge (19) aufweist und **dadurch gekennzeichnet, dass** die Filterlage (1) im Bereich wenigstens einer Kante (3) einen gasundurchlässigen Kragen (5) aufweist.

2. Filterlage (1) nach Anspruch 1, bei der mindestens ein Segment (2) die Form eines Trapezes aufweist.

3. Filterlage (1) nach Anspruch 1 oder 2, bei der die Segmente (2) eine gleich große Filterfläche (4) bilden.

4. Filterlage (1) nach einem der vorhergehenden Ansprüche, bei der die Filterlage (1) die Form eines Kreisringsegmentes hat.

5. Filterlage (1) nach einem der vorhergehenden Ansprüche, bei der wenigstens ein Teil der Mehrzahl der Segmente (2) miteinander direkt stoffschlüssig verbunden sind.

6. Wabenkörper (6) umfassend mindestens eine Filterlage (1) nach einem der vorhergehenden Ansprüche, mindestens eine zumindest teilweise strukturierte Metallfolie (7) und ein konisch geformtes Gehäuse (8), wobei die mindestens eine Filterlage (1) und die mindestens eine Metallfolie (7) so im Gehäuse (8) angeordnet sind, dass eine Vielzahl von Kanälen (9) gebildet ist, die jeweils einen sich verändernden Kanalquerschnitt (10) aufweisen.

7. Wabenkörper (6) nach Anspruch 6, bei dem die Kanäle (9) wenigstens an einer Stelle (11) zumindest teilweise verschlossen sind.

8. Verfahren zur Herstellung einer Filterlage (1) aus zumindest teilweise gasdurchlässigem Material umfassend zumindest die folgenden Schritte:
a) Bereitstellen eines bandförmigen metallischen Faservlieses (12);
b) Trennen des Faservlieses (12) in mehrere Segmente (2);
c) Anordnen der mehreren Segmente (2) so, dass die Filterlage (1) mit gegenüberliegenden Kanten (3) unterschiedlicher Länge (19) gebildet wird;
d) Verbinden der mehreren Segmente (2);
**dadurch gekennzeichnet, dass** zwischen Schritt a) und Schritt b) noch der Schritt ab) durchgeführt wird, der das Anbringen eines gasundurchlässigen Kragens (5) im Bereich wenigstens einer Kante (3) des Faservlies (12) umfasst.

9. Verfahren nach Anspruch 8, bei dem Schritt b) ein Schneiden des Faservlieses (12) in der Art umfasst, dass bezüglich einer Mittelachse (13) eines Segmentes (2) schräge und spiegelbildliche Schnittverläufe (14) erzeugt werden.

10. Verfahren nach Anspruch 8 oder 9, bei dem Schritt c) ein wechselseitiges Positionieren der Segmente (2) umfasst.

11. Verfahren nach einem der Ansprüche 8 bis 10, bei dem zumindest einer der Schritte ab) und d) ein Verschweißen mittels Rollnahtschweißen umfasst.

12. Verfahren nach einem der Ansprüche 8 bis 10, bei dem weiter als Schritt e) eine Seitenendbearbeitung vorgenommen wird, wobei mindestens eine Seite (15) der Filterlage (1) eine vorgegebene Form erhält.

13. Abgasreinigungsvorrichtung (16) umfassend wenigstens:
- zumindest eine Filterlage (1) nach einem der Ansprüche 1 bis 5 oder hergestellt nach einem Verfahren gemäß den Ansprüchen 8 bis 12, oder
- zumindest einen Wabenköper (6) nach einem der Ansprüche 6 oder 7 zum zumindest zeitweiligen Aufhalten und zumindest teilweisen Umsetzen von Partikeln eines Abgasstromes einer Verbrennungskraftmaschine (17) eines Kraftfahrzeuges (18).

## Claims

1. A filter layer (1), comprising an at least partially gas-permeable material having a plurality of segments (2) joined to one another to define opposite filter layer (1) edges (3) of different length (19) **characterized in that** the filter layer (1) comprises a gas-impermeable flange (5) in vicinity of at least one filter layer (1) edge (3)..

2. The filter layer (1) according to claim 1, wherein at least one segment (2) has a trapezoid shape.

3. The filter layer (1) according to claim 1 or 2, wherein the segments (2) form an equal-sized filter area (4).

4. The filter layer (1) according to one of the preceding claims, wherein the filter layer (1) has a circular ring segment shape.

5. The filter layer (1) according to one of the preceding claims, wherein at least some of said plurality of segments (2) are directly joined to one another by a material bonded connection.

6. A honeycomb body (6) comprising at least one filter layer (1) according to one of the preceding claims, at least one at least partially structured metal foil (7) and a conically-shaped housing (8) wherein the at least one filter layer (1) and the at least one metal foil (7) are disposed in said housing (8) in such a manner that a multiplicity of channels (9) is formed each channel (9) having a varying channel cross section (10).

7. The honeycomb body (6) according to claim 6, wherein the channels (9) are at least partially closed off at least at one location (11).

8. A method for manufacturing a filter layer (1) formed of at least partially gas-permeable material comprising at least the following steps:
a) providing a strip-shaped metallic fibrous nonwoven (12);
b) dividing the fibrous nonwoven (12) into a plurality of segments (2);
c) configuring the plurality of segments (2) to provide the filter layer (1) with opposite edges (3) of different length (19); and
d) joining the plurality of segments (2);
**characterized in that** a step ab) is carried out between step a) and step b), the step ab) including attachment of a gas-impermeable flange (5) in the vicinity of at least one edge (3) of the fibrous nonwoven (12).

9. The method according to claim 8, wherein step b) includes cutting the fibrous nonwoven (12) to generate cut profiles (14) being inclined and mirror-symmetrical with respect to a central axis (13) of a segment (2).

10. The method according to claim 8 or 9, wherein step c) includes alternating positioning of the segments (2).

11. The method according to one of the claims 8 to 10, wherein at least one of steps ab) and d) includes welding by roll seam welding.

12. The method according to one of the claims 8 to 11, which further comprises a step e) in which a side-end machining process is carried out by which at least one side (15) of the filter layer (1) obtains a predefined shape.

13. An exhaust gas purification device (16), at least comprising:
- at least one filter layer (1) according to one of the claims 1 to 5 or manufactured by a method according to one of the claims 8 to 12, or
- at leat one honeycomb body (6) according to one of the claims 6 to 7
for at least temporarily obstructing and at least partially converting particles of an exhaust gas flow of an internal combustion engine (17) of a motor vehicle (18).

## Revendications

1. Couche de filtre (1) en matériau au moins partiellement perméable au gaz, comprenant une pluralité de segments (2), qui sont accolés l'un à l'autre de manière telle que la couche de filtre (1) a des bords opposés (3) de longueur différente (19), et **caractérisée en ce que** la couche de filtre (1) présente dans la région d'au moins un bord (3) un col (5) imperméable au gaz.

2. Couche de filtre (1) selon la revendication 1, dans le cas de laquelle au moins un segment (2) a la forme d'un trapèze.

3. Couche de filtre (1) selon la revendication 1 ou 2, dans le cas de laquelle les segments (2) forment une surface de filtre (4) ayant la même taille.

4. Couche de filtre (1) selon l'une des revendications précédentes dans le cas de laquelle la couche de filtre (1) a la forme d'un segment d'anneau de cercle.

5. Couche de filtre (1) selon l'une des revendications précédentes, dans le cas de laquelle au moins une partie de la pluralité des segments (2) sont reliés entre eux directement de façon matériellement jointive.

6. Corps en nids d'abeilles (6) comprenant au moins une couche de filtre (1) selon l'une des revendications précédentes, au moins une feuille métallique au moins partiellement structurée (7) et un boîtier de forme conique (8), l'au moins une couche de filtre (1) et l'au moins une feuille métallique (7) sont agencées de manière telle dans le boîtier (8), qu'une multiplicité de canaux (9) est formée qui ont respectivement une section transversale de canal (10) se transformant.

7. Corps en nids d'abeilles (6) selon la revendication 6, dans le cas duquel les canaux (9) sont au moins fermés partiellement au moins à un endroit (11).

8. Procédé destiné à la fabrication d'une couche de filtre (1) à partir de matériau au moins partiellement perméable au gaz, comprenant au moins les étapes suivantes :
a) Mettre à disposition un non-tissé métallique (12) en forme de bande ;
b) séparer le non-tissé (12) en plusieurs segments (2);
c) agencer les plusieurs segments (2), de sorte que la couche de filtre (1) est formée avec des bords opposés (3) de longueur différente (19) ;
d) connecter les plusieurs segments (2) ;
**caractérisé en ce qu'**entre l'étape a) et l'étape b) l'étape ab) est encore effectuée, laquelle comprend l'application d'un col (5) imperméable au gaz dans la région d'au moins un bord (3) du non-tissé (12).

9. Procédé selon la revendication 8, dans lequel l'étape b) comprend une coupe du non-tissé (12) de telle manière que par rapport à un axe médian (13) d'un segment (2) des tracés de coupe (14) obliques et réfléchis sont générés.

10. Procédé selon la revendication 8 ou 9, dans lequel l'étape c) comprend un positionnement réciproque des segments (2).

11. Procédé selon l'une des revendications 8 à 10, dans lequel au moins une des étapes ab) et d) comprend un soudage au moyen du soudage à la molette.

12. Procédé selon l'une des revendications 8 à 10, dans lequel au-delà de l'étape e) un traitement de l'extrémité latérale est effectué, au moins un coté (15) de la couche de filtre (1) obtenant une forme prédéterminée.

13. Dispositif d'épuration de gaz d'échappement (16) comprenant au moins :
- au moins une couche de filtre (1) selon l'une des revendications 1 à 5 ou fabriquée selon un procédé selon les revendications 8 à 12, ou
- au moins un corps en nids d'abeilles (6) selon l'une des revendications 6 ou 7 pour arrêter au moins temporairement et au moins pour déplacer partiellement des particules d'une flux de gaz d'échappement d'une machine à combustion interne (17) d'un véhicule automobile (18).
